**Europäisches Patentamt**

**European Patent Office**

**Office européen des brevets**

(19)

(11) Numéro de publication : **0 167 190**
**B1**

(12)

# FASCICULE DE BREVET EUROPÉEN

(45) Date de publication du fascicule du brevet :
01.02.89

(51) Int. Cl.⁴ : **B 65 G 53/28**, B 65 G 53/52

(21) Numéro de dépôt : 85200828.3

(22) Date de dépôt : 23.05.85

(54) Procédé de transfert de produits pulvérulents à partir d'un réservoir et installation de mise en oeuvre.

(30) Priorité : 05.06.84 CH 2729/84

(43) Date de publication de la demande :
08.01.86 Bulletin 86/02

(45) Mention de la délivrance du brevet :
01.02.89 Bulletin 89/05

(84) Etats contractants désignés :
AT BE CH DE FR GB IT LI LU NL SE

(56) Documents cités :
AT--B-- 188 493
DE--A-- 1 456 589
DE--A-- 1 531 857
DE--C-- 1 087 520
DE--U-- 1 841 874
GB--A-- 967 407
US--A-- 2 151 514

(73) Titulaire : **DEC Machinery S.A.**
**16, Avenue du Théâtre**
**CH-1005 Lausanne (CH)**

(72) Inventeur : **DEC Machinery S.A.**
**16, Avenue du Théâtre**
**CH-1005 Lausanne (CH)**

(74) Mandataire : **Meylan, Robert Maurice**
c/o BUGNION S.A. 10, route de Florissant Case
Postale 375
**CH-1211 Genève 12 - Champel (CH)**

## Description

La présente invention concerne un procédé de transfert de produits pulvérulents selon le préambule de la VCV1 ainsi qu'une installation de mise en œuvre du procédé.

Des produits se présentant sous la forme de poudres tels que ciment, farine, colorants, etc. ainsi que des produits pâteux fabriqués à partir de poudres doivent dans le cycle de leur fabrication ou celui d'autres produits dont ils sont des composants, être transférés pour être dosés, mélangés, traités. Différents procédés ont été proposés pour réaliser ce transfert, notamment on a proposé d'aspirer le produit se trouvant dans son réservoir dans une chambre ou portion de canalisation et ensuite le refouler après avoir mis en communication ladite chambre ou portion de canalisation avec une canalisation de transfert. Si le produit à transférer est une poudre on foisonne avant le produit pour faciliter son transfert. Cette façon de faire présente comme inconvénient une perte d'énergie (pour le foisonnement) et l'impossibilité d'effectuer une dosage volumétrique, le produit étant foisonné.

Dans le US-A-2 151 514 est décrit un procédé concernant essentiellement le transfert des produits dont les constituants appartiennent à des états différents (solide-liquide, solide-gaz) et il s'agit toujours du transfert de ces produits d'un réservoir dont la pression intérieure est A à un réservoir dont la pression intérieure est B. L'une de ces pressions est habituellement la pression atmosphérique et le réservoir récepteur est toujours à un niveau inférieur à celui du premier réservoir. Avant le transfert, on égalise les pressions dans une chambre intermédiaire.

La présente invention permet de pallier ces inconvénients en proposant un procédé permettant de transférer les produits pulvérulents sans foisonnement préalable.

Le procédé selon l'invention est caractérisé par la clause caractéristique de la revendication 1.

En fermant de façon étanche le réservoir on facilite grandement le transfert du produit lors de l'aspiration par la dépression créée dans le réservoir éliminant ainsi la nécessité de foisonner auparavant un produit pulvérulent.

Selon une variante l'orifice d'aspiration est situé à la partie inférieure du réservoir, ainsi le travail d'aspiration est assisté par le poids propre du produit contenu dans le réservoir et du couvercle ce qui facilite le travail lors de la phase d'aspiration et permet même de faire des économies d'énergie.

Enfin il est possible d'effectuer un dosage volumétrique dans la canalisation d'aspiration, le volume d'une section de ladite canalisation correspondant à une dose de produit. Ce dosage est particulièrement précis pour les produits pulvérulents car, d'une part ils n'ont pas été préalablement foisonnés, et d'autre part le réservoir étant fermé de manière étanche de l'air ne peut pas être aspiré à travers le produit pour fausser le dosage.

L'invention concerne également une installation de mise en œuvre du procédé dont trois variantes préférées sont décrites à l'aide du dessin annexé.

La figure 1 est une vue schématique d'une première variante de l'installation de mise en œuvre du procédé.

La figure 2 est une vue schématique d'une deuxième variante de l'installation.

La figure 3 est une vue schématique partielle d'une troisième variante.

Le procédé sera mieux compris après description des trois variantes d'exécution de l'installation de mise en œuvre.

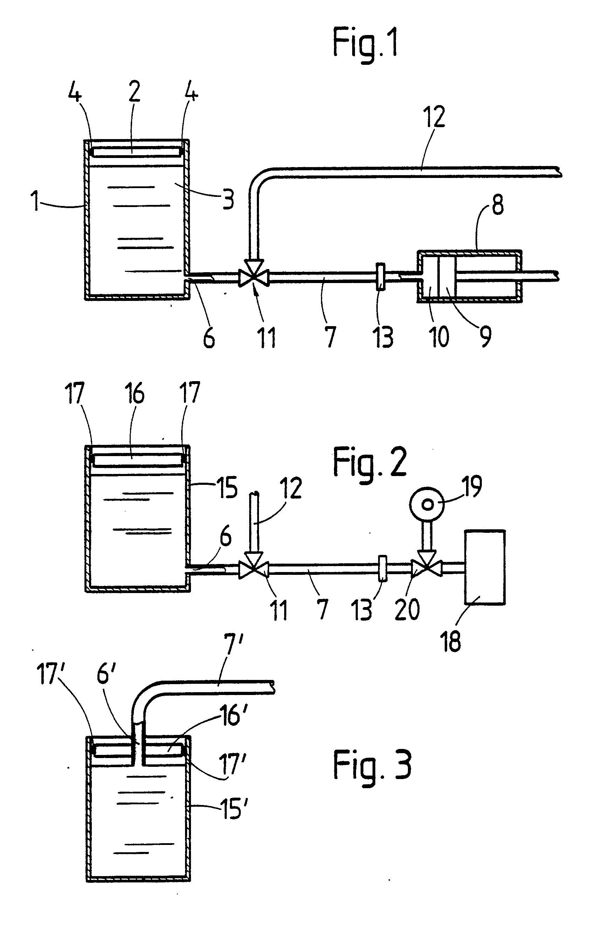

L'exemple d'exécution de la figure 1 comprend un réservoir 1 fermé par un couvercle 2 coulissant à l'intérieur du réservoir et muni d'une garniture d'étanchéité 4 et contenant un produit à transférer 3. Un orifice 6 à la partie inférieure du réservoir est branché à une canalisation d'aspiration 7 dont la seconde extrémité est branchée à un dispositif d'aspiration et refoulement 8, qui dans le cas présent est un piston 9 se déplaçant de façon étanche dans une chambre cylindrique 10 entraînée, par exemple, par un vérin pneumatique à double effet non représenté. Une vanne à trois voies 11 permet de mettre en communication la canalisation d'aspiration 7 avec, soit le réservoir 1 soit une canalisation de transfert 12 aboutissant au lieu de transfert du produit 3. A proximité du dispositif d'aspiration et de refoulement 8 on a disposé, à travers la canalisation 7, un filtre 13 empêchant le passage du produit lors de la phase d'aspiration vers le dispositif 8.

Le transfert du produit est obtenu de la manière suivante : après avoir rempli le réservoir avec le produit pulvérulent 3, on ferme le réservoir 1 avec le couvercle 2, 4, on agit sur la vanne à trois voies 11 pour mettre en communication la canalisation 7 avec l'orifice 6 et on fait reculer le piston 9 ce qui provoque une dépression dans la canalisation 7 et une quantité de produit 3, sous l'effet de la dépression et du poids du produit 3 et du couvercle 2 se trouvant au-dessus de l'orifice 6, passe dans la canalisation 7 jusqu'au filtre 13. Lors de l'aspiration le couvercle 2 sous l'effet de la dépression descend avec le produit assurant ainsi, d'une part que la dépression ne dépasse pas une certaine valeur limite, par la variation de volume, et d'autre part il exerce une poussée sur le produit et facilite le travail d'aspiration. Par la suite, on agit sur la vanne à trois voies pour mettre en communication les canalisations 12 et 7 et on expulse le produit de la canalisation d'aspiration 7 vers la canalisation de transfert 12 en faisant avancer le piston 9 dans la chambre 10. La section de la canalisation 7 comprise entre le filtre 13 et la vanne à trois voies 11 peut être utilisée pour effectuer un dosage volumétrique. Il suffit pour cela que le volume de cette section soit égal à une dose et qu'elle puisse être complètement remplie par du produit 3 lors d'un simple recul du piston 9.

A la figure 2 on a représenté une autre variante. Le réservoir 15 est fermé par un couvercle 16 muni aussi sur son pourtour d'une garniture d'étanchéité 17. Les moyens d'aspiration et de refoulement sont ici composés d'un dispositif aspirateur 18, par exemple un aspirateur à hélice, et d'une source d'air comprimé 19 assurant le refoulement du produit. Une vanne à trois voies 20 assure successivement la mise en communication du dispositif d'aspiration avec la canalisation 7 lors de l'aspiration, et par suite la mise en communication de la source d'air comprimé 19 avec la canalisation 7 pour le refoulement. Dans cette installation les vannes à trois voies 11 et 20 peuvent être commandées parallèlement ou avec une petite temporisation.

Enfin à la figure 3 l'installation est similaire à celle de la figure 2 excepté en ce qui concerne l'orifice d'aspiration 6 qui se trouve sur le couvercle mobile 16, et la canalisation d'aspiration 7, est un tube flexible pour permettre de suivre le couvercle 16' lors de son déplacement à l'intérieur du réservoir 15'. Dans ce cas la phase d'aspiration ne bénéfice pas du poids du produit néanmoins, le couvercle 16' descendant au fur et à mesure agit, comme pour le cas précédent, comme un piston et expulse le produit dans la canalisation 7' et en même temps effectue le raclage des parois diminuant les pertes de matière au minimum.

Il convient de souligner que le filtre 13, lors de la phase de refoulement est nettoyé par l'air passant à travers ce qui rend l'installation économique au point de vue maintenance.

La troisième variante est particulièrement intéressante pour le transfert des produits se trouvant dans des réservoirs de dimensions standard il suffit de fermer un tel réservoir par un couvercle 16' muni d'une garniture d'étanchéité 17' et de procéder comme décrit précédemment pour transférer le produit de ce réservoir au lieu de son utilisation.

Bien entendu il est possible, lorsque les moyens d'aspiration et de refoulement sont ceux de la figure 1, de ne pas utiliser le filtre 13 et dans ce cas le produit lors de l'aspiration rentre dans la chambre cylindrique 10 du vérin 8 et il est expulsé par le piston 9 lors de la phase de refoulement.

En restant toujours dans les limites de la présente invention on peut en appliquant toujours le même procédé utiliser des moyens d'aspiration et de refoulement communs à plusieurs réservoirs et transférer de manière sélective les produits qui sont stockés dans l'un ou l'autre de ces réservoirs. Dans ce cas, les moyens d'aspiration et de refoulement sont mis en communication avec l'une ou l'autre des conduites 7, 7' par un jeu de vannes à trois valves.

## Revendications

1. Procédé de transfert de produits pulvérulents (3) à partir d'un réservoir (1, 15, 15') fermé de façon étanche selon les étapes suivantes : on aspire par un orifice (6, 6') du réservoir (1, 15, 15') une quantité de produit dans une canalisation d'aspiration (7), on interrompt la communication entre le réservoir (1, 15, 15') et la canalisation d'aspiration (7) et on met en communication la canalisation d'aspiration (7) avec une canalisation de transfert (12), on expulse le produit de la canalisation d'aspiration (7) dans la canalisation de transfert (7), on interrompt la communication entre les deux canalisations (7 ; 12) et on la rétablit entre le réservoir (1, 15, 15') et la canalisation d'aspiration et ainsi de suite, caractérisé en ce que le couvercle (2, 16, 16') fermant le réservoir est monté coulissant à l'intérieur du réservoir de manière étanche.

2. Procédé selon la revendication 1 caractérisé par le fait que l'on aspire le produit (3) par un orifice (6) situé à la partie inférieure du réservoir (1, 15).

3. Procédé selon l'une des revendications 1 à 2, caractérisé par le fait que l'on effectue un dosage volumétrique au moyen d'une section de la canalisation d'aspiration (7).

4. Installation pour la mise en œuvre du procédé selon la revendication 1, caractérisée par le fait qu'elle comprend un réservoir (1, 15, 15') contenant un produit pulvérulent (3), fermé de façon étanche par un couvercle coulissant (2, 16, 16') et pourvu d'un orifice d'aspiration (6), une canalisation d'aspiration (7) branchée par une de ses extrémités à l'orifice d'aspiration du réservoir (1, 15) et par l'autre extrémité à des moyens d'aspiration et de refoulement (9, 10 ; 18, 19), une canalisation de transfert (12) branchée à travers un dispositif de commutation (11) à un point intermédiaire de la canalisation d'aspiration (7) et débouchant au lieu d'acheminement du produit.

5. Installation selon la revendication 4, caractérisée par le fait que la canalisation d'aspiration (7) est munie, à proximité de son extrémité branchée aux moyens d'aspiration et de refoulement (9, 10 ; 18, 19) d'un filtre (13) empêchant le passage du produit vers les moyens d'aspiration et refoulement (9, 10 ; 18, 19).

6. Installation selon l'une des revendications 4 ou 5, caractérisée par le fait que l'orifice d'aspiration (6) se situe à la partie inférieure du réservoir (1, 15).

7. Installation selon la revendication 4, caractérisée par le fait que l'orifice d'aspiration (6') est situé sur le couvercle (16') et la partie de la canalisation d'aspiration (7') qui est branchée est une canalisation flexible.

8. Installation selon l'une des revendications 4 à 7, caractérisée par le fait que les moyens d'aspiration et de refoulement se réduisent à un piston (9) se déplaçant de façon étanche dans une chambre cylindrique (10) sous l'action d'un vérin à double effet.

9. Installation selon l'une des revendications 4 à 7, caractérisée par le fait que les moyens d'aspiration et de refoulement comprennent, d'une part un dispositif d'aspiration tel qu'un aspirateur conventionnel (18) et d'autre part, un dispositif de refoulement tel qu'une source d'air comprimé (19).

## Claims

1. A method of transferring pulverulent (3) products from a tank (1, 15, 15'), tightly closed according to the following steps : exhausting an amount of said product through an outlet orifice (6, 6') of said tank (1, 15, 15') into an exhaust pipe (7), discontinuing the communication between the tank (1, 15, 15') and said exhaust pipe (7) and connecting said exhaust pipe (7) to a transfer pipe (12), forcing the product contained in said exhaust pipe (7) into transfer pipe (12), discontinuing the communication between the two pipes (7 ; 12) and restoring said communication between said tank (1, 15, 15') and said exhaust pipe and so forth, characterized by the fact that the cover (2, 16, 16') closing the tank is mounted movable in fluid-tight relationship inside the tank.

2. A method according to claim 1, characterized by the fact that the product (3) is exhausted through an outlet orifice (6) located in the lower portion of said tank (1, 15).

3. A method according to one of claims 1 to 2, characterized by the fact that a volumetric proportioning of said product is accomplished by utilizing one section of said exhaust pipe (7).

4. Apparatus for carrying out the method of claim 1, characterized by the fact that it comprises a tank (1, 15, 15') containing a pulverulent product (3), closed in a fluid-tight manner by a movable cover (2, 16, 16') and comprising an exhaust orifice (6), an exhaust pipe (7) connected at one end to said exhaust orifice of the tank (1, 15) and at its opposite end to exhaust and force means (9, 10 ; 18, 19), a transfer pipe (12) connected through switch means (11) to an intermediate point of said exhaust pipe (7) and having its outlet end disposed at the point of delivery of the product.

5. Apparatus according to claim 4, characterized by the fact that the exhaust pipe (7) comoprises, at its end connected to said exhaust and force means (9, 10 ; 18, 19), a filter (13) for preventing said product from flowing towards said exhaust and force means (9, 10 ; 18, 19).

6. Apparatus according to one of claims 4 or 5, characterized by the fact that the exhaust orifice (6) is located in the lower portion of the tank (1, 15).

7. Apparatus according to claim 4, characterized by the fact that the exhaust orifice (6') is formed through said cover (16') and the exhaust pipe (7') section connected thereto is a flexible hose.

8. Apparatus according to one of claims 4 to 7, characterized by the fact that the exhaust and force means consist simply of a piston (9) adapted to move in fluidtight relationship along the inner walls of a cylindrical chamber (10) under the control of a double-acting cylinder.

9. Apparatus according to one of claims 4 to 7, characterized by the fact that the exhaust and force means comprise, on the one hand, an exhaust device such as a conventional vacuum generator (18) and, on the other hand, a forcing device such as a source of compressed air (19).

## Patentansprüche

1. Verfahren zum Ueberführen von pulverförmigen Produkten (3) aus einem dicht geschlossenen Vorratsbehälter (1, 15, 15') gemäss folgenden Schritten : Man saugt eine Menge des Produkts durch eine Oeffnung (6, 6') des Vorratsbehälters (1, 15, 15') in einen Saugkanal (7), man unterbricht die Verbindung zwischen dem Vorratsbehälter (1, 15, 15') und dem Saugkanal (7) und verbindet den Saugkanal (7) mit einem Ueberführungskanal (12), man treibt das Produkt aus dem Saugkanal (7) in den Ueberführungskanal (12), man unterbricht die Verbindung zwischen den beiden Kanälen (7 ; 12) und stellt die Verbindung zwischen dem Vorratsbehälter (1, 15, 15') und dem Saugkanal wieder her, und so weiter, dadurch gekennzeichnet, dass der Deckel (2, 16, 16'), der den Vorratsbehälter verschliesst, auf dichte Weise verschiebbar im Innern des Vorratsbehälters montiert ist.

2. Verfahren nach Anspruch 1, dadurch gekennzeichnet, dass man das Produkt (3) durch eine Oeffnung (6) ansaugt, die im unteren Teil des Vorratsbehälters (1, 15) angeordnet ist.

3. Verfahren nach einem der Ansprüche 1 und 2, dadurch gekennzeichnet, dass man eine Volumendosierung mit Hilfe eines Abschnitts des Saugkanals (7) durchführt.

4. Installation zur Durchführung des Verfahrens nach Anspruch 1, dadurch gekennzeichnet, dass sie einen durch einen verschiebbaren Deckel (2, 16, 16') auf dichte Weise verschlossenen Vorratsbehälter (1, 15, 15'), der ein pulverförmiges Produkt enthält und mit einer Saugöffnung (6) versehen ist, einen Saugkanal (7), der mit einem seiner Enden an die Saugöffnung des Vorratsbehälters (1, 15) und mit seinem anderen Ende an Vorrichtungen zum Ansaugen und Verdrängen (9, 10 ; 18, 19) angeschlossen ist, und einen Ueberführungskanal (12) aufweist, der über eine Umschaltvorrichtung (11) an eine Zwischenstelle des Saugkanals (7) angeschlossen ist und am Orte, zu dem das Produkt befördert werden soll, mündet.

5. Installation nach Anspruch 4, dadurch gekennzeichnet, dass der Saugkanal (7) in der Nähe seines Endes, welches an die Vorrichtungen zum Ansaugen und Verdrängen (9, 10 ; 18, 19) angeschlossen ist, mit einem Filter (13) ausgerüstet ist, welcher den Durchgang des Produkts zu den Vorrichtungen zum Ansaugen und Verdränge (9, 10 ; 18, 19) verhindert.

6. Installation nach einem der Ansprüche 4 oder 5, dadurch gekennzeichnet, dass die Saugöffnung (6) im unteren Teil des Vorratsbehälters (1, 15) angeordnet ist.

7. Installation nach Anspruch 4, dadurch gekennzeichnet, dass die Saugöffnung (6') am Deckel (16') angeordnet ist und dass der angeschlossene Teil des Saugkanals (7') eine flexible Leitung ist.

8. Installation nach einem der Ansprüche 4 bis 7, dadurch gekennzeichnet, dass die Vorrichtungen zum Ansaugen und Verdrängen von einem Kolben (9) gebildet werden, der sich auf dichte Weise in einer zylindrischen Kammer (10) unter der Wirkung eines doppelt wirkenden Zylinders verschiebt.

9. Installation nach einem der Ansprüche 4 bis 7, dadurch gekennzeichnet, dass die Vorrichtungen zum Ansaugen und Verdrängen einerseits eine Ansaugvorrichtung, wie einen üblichen Saugapparat (18), und andererseits eine Verdrängungsvorrichtung, wie eine Druckluftquelle (19), aufweisen.

Fig.1

Fig.2

Fig.3